# EUROPEAN PATENT SPECIFICATION

(11) **EP 3 948 536 B1**
(45) Date of publication and mention of the grant of the patent: **06.05.2026**
(21) Application number: 19715467.7
(22) Date of filing: 02.04.2019
(51) Int. Cl.: G06F 9/50

(54) **TECHNIQUE FOR SIMPLIFYING MANAGEMENT OF A SERVICE IN A CLOUD COMPUTING ENVIRONMENT**
VERFAHREN ZUR VEREINFACHUNG DER VERWALTUNG EINES DIENSTES IN EINER CLOUD-COMPUTING-UMGEBUNG
TECHNIQUE DESTINÉE À SIMPLIFIER LA GESTION D'UN SERVICE DANS UN ENVIRONNEMENT INFORMATIQUE DÉMATÉRIALISÉ

(43) Date of publication of application: 09.02.2022
(73) Proprietor: Telefonaktiebolaget LM Ericsson (publ), 164 83 Stockholm (SE)
(72) Inventor: SANTOS, Mateus, 01527-050 Sao Paulo (BR); ESTEVE ROTHENBERG, Christian, 13272-799 Valinhos (BR); GOMES DA SILVA, Pedro Henrique, 13339-545 Indaiatuba (BR); PEREZ, Danny, 13084-639 Campinas (BR); VIDAL, Allan, 13338-120 Indaiatuba (BR)
(74) Representative: Ericsson
(86) International application number: PCT/EP2019/058274
(87) International publication number: WO 2020/200427

(56) References cited:
- US-A1- 2012 226 789

## Description

### Technical Field

The present disclosure generally relates to the field of cloud computing. In particular, a technique for simplifying management of a service on a network infrastructure in a cloud computing environment is presented. The technique may be embodied in methods, computer programs, apparatuses and systems.

### Background

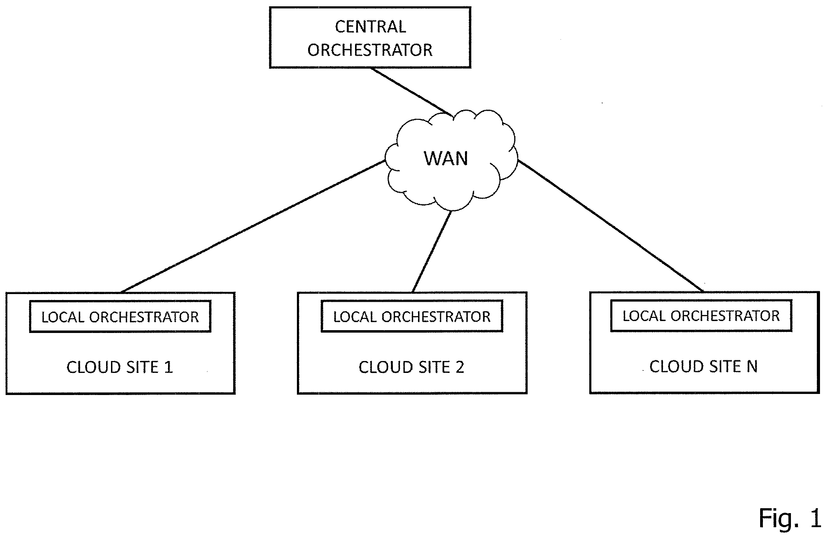

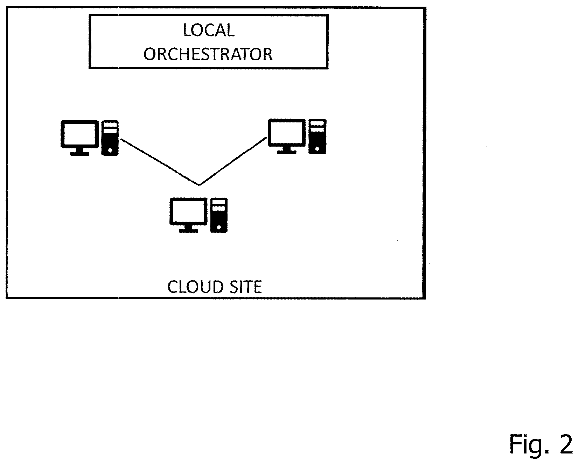

In distributed cloud environments, including edge computing and more centralized approaches, cloud sites may be geographically distributed and interconnected through a wide area network (WAN). Figure 1 shows an exemplary cloud computing environment comprising a plurality of interconnected cloud sites, wherein a central orchestrator may establish communication with local orchestrators placed at the individual sites. Figure 2 schematically illustrates a more detailed view of a site and shows that cloud sites may essentially comprise cloud nodes as well as connections between cloud nodes.

Cloud sites may become candidate hosting targets for virtualized network functions (VNFs) and services. Orchestrators (either central or local orchestrators) may receive deployment descriptions of VNFs (or subsets thereof) and/or services to execute the actual deployment or instantiation thereof. VNFs and services may be deployed upon instructions from the central orchestrator, or locally using a local orchestrator without communication with the central orchestrator via the WAN. Open source projects employing local and central orchestrators include the Akraino Edge Stack project and the Open Networking Automation Platform (ONAP) project, for example.

VNFs may be chained with other VNFs and/or physical network functions (PNFs) to realize a network service. A deployment description or service description may define deployment requirements and the operational behavior of the VNFs and services. Examples are the VNF descriptor (VNFD) and the network service descriptor (NSD) which are described in ETSI GS NFV-SOL 001, such as in ETSI GS NFV-SOL 001 V2.5.1 (2018-12), for example. VNFDs and NSDs may include constructs to model VNFs such as those defined in ETSI GS NFV 003 (e.g., ETSI GS NFV 003 V1.4.1 (2018-08)) including constructs, such as the virtualization deployment unit (VDU) which may be mapped to a virtual machine (VM) or a container, for example, and the virtual link (VL) which may be used to connect two or more entities, such as VNFs or VNF components (VNFCs), for example.

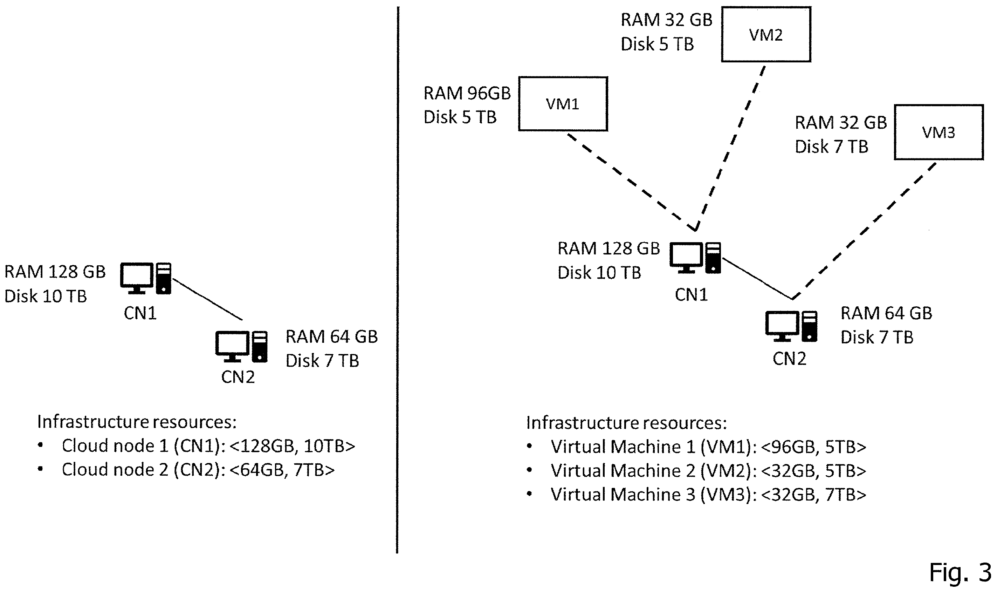

As said, VNFs and services may be deployed or instantiated on infrastructure resources of cloud sites. Such infrastructure resources are typically represented in the form of a network inventory. Exemplary network inventories are illustrated in Figure 3 where cloud nodes (or "compute nodes") of the network infrastructure are associated with particular capacities, such as random access memory (RAM) and hard disk capacities, for example. While the left side of the figure shows an exemplary inventory of physical compute nodes, the right side of the figure illustrates that a network inventory may also include virtualized infrastructure resources, such as VMs, for example. A network inventory may generally correspond to a (e.g., real-time) representation (or "view") of available resources in a network infrastructure, which may include hardware resources (e.g., compute, storage), software resources (e.g., VNFs) and the connection/link resources therebetween.

Building a network inventory may form a fundamental step of any VNF or service deployment and may generally be required to solve the placement problem, i.e., to decide where to (e.g., best) instantiate VNF or service components on the available infrastructure. The size of a network inventory may be very large in distributed cloud and edge computing scenarios, however. As a result, the placement problem may become less tractable due to the inherent scalability and multi-dimensional nature of the optimization problem to be solved and it may therefore be difficult for engines (e.g., placement engines) to process the large amount of data from the inventory to deploy a VNF or service (or to perform more general network management tasks, such as rearranging or scaling VNFs or workloads, for example) in a short amount of time.

US 2012/0226789 A1 discloses a cloud computing system comprising a plurality of data centers, each data center comprising a plurality of pods each of which comprises network, compute, storage and service node devices. At a designated device of a data center, data center level capabilities summary data is generated that summarizes the capabilities of the data center. Messages advertising the data center level capabilities summary data is sent from a designated device of each data center to a designated device at a provider edge network level of the computing system. At the designated device at the provider edge network level, provider edge network level capabilities summary data is generated that summarizes capabilities of compute, storage and network devices for each data center as a whole and without exposing individual compute, storage and service node devices in each data center.

### Summary

Accordingly, there is a need for a technique for simplifying network management in a cloud computing environment that avoids the problems discussed above, or other problems.

According to the present disclosure, methods, computing units and a computer program product according to the independent claims are provided. Developments are set forth in the dependent claims.

According to a first aspect, a method for simplifying management of a service on a network infrastructure in a cloud computing environment is provided. The method is performed by an aggregation component and comprises generating, for a service to be managed on the network infrastructure and based on a representation of resources available in the network infrastructure, an aggregated representation of the resources available in the network infrastructure, wherein aggregated resources in the aggregated representation are computed to comply with one or more capacity-related requirements of the service to be managed, and providing the aggregated representation to an orchestration component for management of the service.

The resources in the representation may comprise nodes and links of the network infrastructure each providing a particular capacity. Generating the aggregated representation of the resources may include determining whether at least one of node aggregation and link aggregation is required for the aggregated resources to comply with the one or more capacity-related requirements of the service. When it is determined that node aggregation is required, generating the aggregated representation of the resources may include aggregating at least two nodes of the network infrastructure to obtain an aggregated node that complies with the one or more capacity-related requirements of the service. Node aggregation may be performed under a constraint that nodes at different sites of the cloud computing environment are not to be aggregated. When it is determined that link aggregation is required, generating the aggregated representation of the resources may include aggregating at least two links of the network infrastructure to obtain an aggregated link that complies with the one or more capacity-related requirements of the service.

Determining whether node aggregation is required may include determining a reference value of available node capacities in the network infrastructure, calculating a total of required node capacities from the one or more capacity-related requirements of the service, and determining whether node aggregation is required based on a comparison of the total of required node capacities with the reference value of available node capacities. The reference value of available node capacities may be determined as one of a sum of available node capacities and an average of available node capacities per site in the cloud computing environment. The reference value of available node capacities may be determined differently per site in the cloud computing environment. Determining whether link aggregation is required may include determining a reference value of available link capacities in the network infrastructure, calculating a total of required link capacities from the one or more capacity-related requirements of the service, and determining whether link aggregation is required based on a comparison of the total of required link capacities with the reference value of available link capacities.

The one or more capacity-related requirements of the service may be derived from a deployment descriptor of the service. The deployment descriptor of the service may be obtained from a service catalog available in the cloud computing environment. When the service corresponds to a network service to be managed on the network infrastructure, the one or more capacity-related requirements of the service may be derived from a network service descriptor of the network service. When the service corresponds to a virtualized network function to be managed on the network infrastructure, the one or more capacity-related requirements of the service may be derived from a virtualized network function descriptor of the virtualized network function. Node-related requirements among the one or more capacity-related requirements of the service may be derived from at least one definition of a virtual deployment unit in the deployment descriptor. Link-related requirements among the one or more capacity-related requirements of the service may be derived from at least one definition of a virtual link in the deployment descriptor.

The aggregation component may be executed as a component of the orchestration component, wherein the orchestration component may be a central orchestration component being centrally responsible for management of services on the network infrastructure in the cloud computing environment. Alternatively, the aggregation component may be executed in a distributed manner on at least one of a central orchestration component being centrally responsible for management of services on the network infrastructure in the cloud computing environment and one or more local orchestration components each being locally responsible for management of services on a local network infrastructure of a site of the cloud computing environment.

According to a second aspect, a method for simplifying management of a service on a network infrastructure in a cloud computing environment is provided. The method is performed by an orchestration component and comprises obtaining, from an aggregation component, an aggregated representation of resources available in the network infrastructure, the aggregated representation being generated for a service to be managed on the network infrastructure and based on a representation of resources available in the network infrastructure, wherein aggregated resources in the aggregated representation comply with one or more capacity-related requirements of the service to be managed, and triggering management of the service based on the aggregated representation.

The method according to the second aspect defines a method from the perspective of an orchestration component which may be complementary to the method performed by the aggregation component according to the first aspect. The aggregation component and the orchestration component of the second aspect may thus correspond to the aggregation component and the orchestration component described above in relation to the first aspect. Triggering management of the service based on the aggregated representation may include calculating a placement of the service on the network infrastructure based on the aggregated representation of the resources, and triggering management of the service based on the calculated placement.

According to a third aspect, a computer program product is provided. The computer program product comprises program code portions for performing the method of at least one of the first aspect and the second aspect when the computer program product is executed on one or more computing devices (e.g., a processor or a distributed set of processors). The computer program product may be stored on a computer readable recording medium, such as a semiconductor memory, DVD, CD-ROM, and so on.

According to a fourth aspect, a computing unit configured to execute an aggregation component for simplifying management of a service on a network infrastructure in a cloud computing environment is provided. The computing unit comprises at least one processor and at least one memory, wherein the at least one memory contains instructions executable by the at least one processor such that the aggregation component is operable to perform any of the method steps presented herein with respect to the first aspect.

According to a fifth aspect, a computing unit configured to execute an orchestration component for simplifying management of a service on a network infrastructure in a cloud computing environment is provided. The computing unit comprises at least one processor and at least one memory, wherein the at least one memory contains instructions executable by the at least one processor such that the orchestration component is operable to perform any of the method steps presented herein with respect to the second aspect.

According to a sixth aspect, there is provided a system comprising a computing unit according to the fourth aspect and a computing unit according to the fifth aspect.

### Brief Description of the Drawings

Implementations of the technique presented herein are described herein below with reference to the accompanying drawings, in which:
- Fig. 1: illustrates an exemplary cloud computing environment comprising a plurality of interconnected cloud sites;
- Fig. 2: illustrates a detailed schematic view of a cloud site;
- Fig. 3: illustrates exemplary network inventories including cloud nodes and their associated capacities;
- Figs. 4a and 4b: illustrate exemplary compositions of a computing unit configured to execute an aggregation component and a computing unit configured to execute an orchestration component according to the present disclosure;
- Fig. 5: illustrates a method which may be performed by the aggregation component according to the present disclosure;
- Fig. 6: illustrates an exemplary deployment descriptor in the form of a VNFD according to the present disclosure;
- Figs. 7a and 7b: illustrate exemplary system architectures in which the aggregation component is executed as part of a central orchestration component or in a distributed manner across several orchestration components according to the present disclosure;
- Fig. 8: illustrates a method which may be performed by the orchestration component according to the present disclosure;
- Fig. 9: illustrates a more detailed method which may be performed by the orchestration component according to the present disclosure;
- Fig. 10: illustrates a sequence diagram providing an overview of an overall placement process using the aggregation component according to the present disclosure;
- Fig. 11: illustrates a more detailed method of building up an aggregated network inventory for a plurality of services according to the present disclosure;
- Fig. 12: illustrates an exemplary method of carrying out classification of a service as a service which requires node aggregation or not according to the present disclosure; and
- Fig. 13: illustrates an exemplary implementation of the technique presented herein using ONAP and OpenStack.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

Those skilled in the art will further appreciate that the steps, services and functions explained herein below may be implemented using individual hardware circuitry, using software functioning in conjunction with a programmed micro-processor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

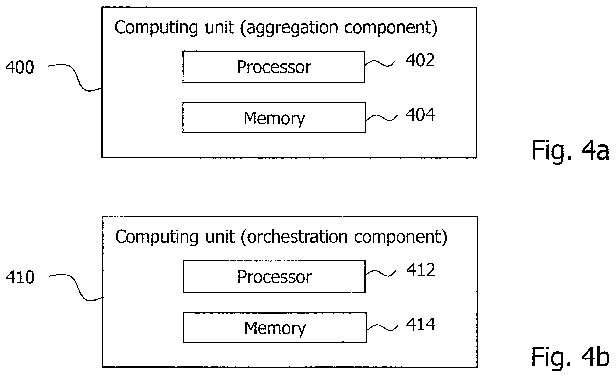

Figure 4a schematically illustrates an exemplary composition of a computing unit 400 configured to execute an aggregation component for simplifying management of a service on a network infrastructure in a cloud computing environment. The computing unit 400 comprises at least one processor 402 and at least one memory 404, wherein the at least one memory 404 contains instructions executable by the at least one processor 402 such that the aggregation component is operable to carry out the method steps described herein below with reference to the aggregation component.

Figure 4b schematically illustrates an exemplary composition of a computing unit 410 configured to execute an orchestration component for simplifying management of a service on a network infrastructure in a cloud computing environment. The computing unit 410 comprises at least one processor 412 and at least one memory 414, wherein the at least one memory 414 contains instructions executable by the at least one processor 412 such that the orchestration component is operable to carry out the method steps described herein below with reference to the orchestration component.

It will be understood that each of the computing unit 400 and the computing unit 410 may be implemented on a physical computing unit or a virtualized computing unit, such as a virtual machine, for example. It will further be appreciated that each of the computing unit 400 and the computing unit 410 may not necessarily be implemented on a standalone computing unit, but may be implemented as components - realized in software and/or hardware - residing on multiple distributed computing units as well, such as in a cloud computing environment, for example.

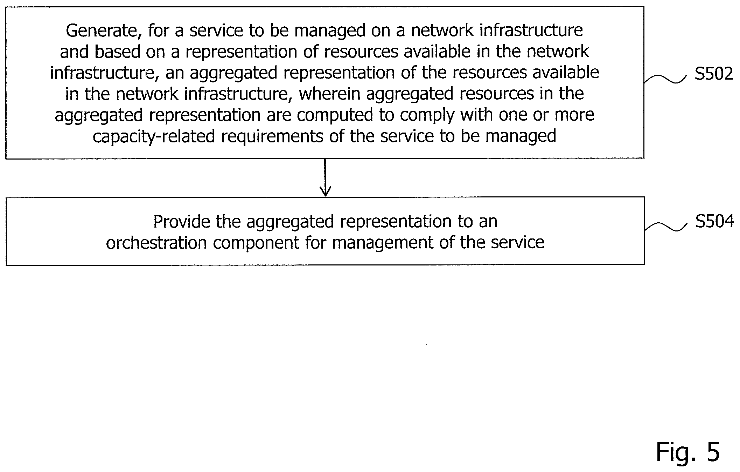

Figure 5 illustrates a method which may be performed by the aggregation component executed on the computing unit 400 according to the present disclosure. The method is dedicated to simplifying management of a service on a network infrastructure in a cloud computing environment. In step S502, the aggregation component may generate, for a service to be managed on the network infrastructure and based on a representation of resources available in the network infrastructure, an aggregated representation of the resources available in the network infrastructure, wherein aggregated resources in the aggregated representation are computed to comply with one or more capacity-related requirements of the service to be managed. In step S504, the aggregation component may provide the aggregated representation to an orchestration component for management of the service.

The representation of resources available in the network infrastructure may correspond to a conventional network inventory (e.g., a central network inventory maintained by a central orchestrator receiving topologies of nodes and links of different sites of the cloud computing environment from local orchestrators at the sites and building the centralized network inventory based thereon) and, by generating an aggregated representation of the resources available in the network infrastructure, an aggregated network inventory may be created to provide an aggregated view of the available resources. The method performed by the aggregation component may thus be seen as a method for performing network inventory aggregation.

The aggregated representation of the resources may specifically be generated for a service to be managed, wherein aggregated resources in the aggregated representation may be computed to comply with one or more capacity-related requirements of the particular service to be managed. The aggregated representation (or "view") may therefore be optimized for the service to be managed in terms of its requirements and the service requirements may as such be used to guide the level of aggregation (or "abstraction"). The service itself may correspond to any service that is deployable on the network infrastructure of the cloud computing environment. For example, the service may be a VNF or a network service, such as a network service which comprises one or more VNFs and/or PNFs, for example.

Once generated, the aggregated representation may be provided (e.g., sent) to an orchestration component which may effectively carry out the management of the service. The orchestration component may correspond to one of a central orchestrator and a local orchestrator in the cloud computing environment, for example. If the service is a new service to be deployed, the management of the service may correspond to deployment of the service on the network infrastructure and, if the service is an existing service, the management of the service may relate to performing a life-cycle operation regarding the service, e.g., a rearrangement of service resources, such as scaling VNFs or workloads, for example.

As the aggregated representation of the resources available in the network infrastructure may - due to the aggregation being performed - comprise a reduced number of nodes and/or links as compared to the original representation of the resources available in the network infrastructure (e.g., as available in the conventional network inventory), management operations regarding the service may generally be simplified. For example, the placement problem for a new service may be alleviated because less time may be required to calculate where to (e.g., best) instantiate the service on the available infrastructure. The same may apply to the management of existing services, i.e., when service resources are to be rearranged, for example.

The resources in the representation may comprise nodes and links of the network infrastructure each providing a particular capacity, and the aggregated resources in the aggregated representation may thus correspond to aggregated nodes and aggregated links each providing a particular aggregated capacity. As said, the aggregated resources may be computed to comply with the capacity-related requirements of the service to be managed. As such, the capacity-related requirements may relate to capacities provided by nodes and/or links of the network infrastructure, including node-related capacities, such as at least one of central processing unit (CPU), RAM and hard disk related capacities provided at a node (e.g., number of CPUs and their speeds, amount of RAM (e.g., 32 GB of RAM), amount of disk space (e.g., 10 TB of disk space), etc.), and/or link-related capacities, such as at least one of bandwidth characteristics and latency characteristics of a link (e.g., 100 Gbps of throughput, 1 ms round trip time, etc.). Node-related and link-related capacities may not only include capacities provided by physical nodes and links but also capacities provided by virtualized nodes and links, such as VMs and VLs, for example.

An aggregated representation may be created for each service among a plurality of services to be managed so that multiple network views may generally be constructed over the same resource infrastructure. The views may then be used to form the aggregated network inventory. Every new service to be managed may trigger the creation of another aggregated representation that may become part of the aggregated inventory, which may then be used by placement engines and/or management systems as an optimized network inventory for optimized service placement and improved network management, as described above.

In order to generate an aggregated representation of the resources available in the network infrastructure for a particular service to be managed, a two-step procedure may generally be performed. In a first step of the procedure, a classification of the service may be carried out to determine, given the capacity-related requirements of the service, whether the service is a service which requires node aggregation and/or a service which requires link aggregation. In the second step of the procedure, the actual node aggregation and/or link aggregation may be executed based on the classification results, e.g., by grouping respective notes and/or links and summing up their individual capacities.

Generating the aggregated representation of the resources may thus include determining whether at least one of node aggregation and link aggregation is required for the aggregated resources to comply with the one or more capacity-related requirements of the service. When it is determined that node aggregation is required, generating the aggregated representation of the resources may include aggregating at least two nodes of the network infrastructure to obtain an aggregated node that complies with the one or more capacity-related requirements of the service. The aggregated node may thus be determined in a manner so that the sum of the node-related capacities of the individual nodes which are grouped into the aggregated node comply with the service requirements. The same may generally apply to the generation of an aggregated link. Thus, when it is determined that link aggregation is required, generating the aggregated representation of the resources may include aggregating at least two links of the network infrastructure to obtain an aggregated link that complies with the one or more capacity-related requirements of the service. To avoid that nodes located at different cloud sites are aggregated, node aggregation may be performed under a constraint that nodes at different sites of the cloud computing environment are not to be aggregated.

In order to carry out the above-mentioned classification as a service which requires node aggregation or not, a procedure to determine whether - given the capacity-related requirements of the service - the network infrastructure is overprovisioned or underprovisioned may be performed. To this end, determining whether node aggregation is required may include determining a reference value of available node capacities in the network infrastructure, calculating a total of required node capacities from the one or more capacity-related requirements of the service, and determining whether node aggregation is required based on a comparison of the total of required node capacities with the reference value of available node capacities. The reference value may be indicative of actual hardware capabilities of cloud sites, for example, and by comparing the reference value with the total of required node capacities derived from the capacity-related requirements of the service, it may be determined whether the network infrastructure is overprovisioned (i.e., that resources are available in abundance in terms of their capacities) or whether the network infrastructure is underprovisioned (i.e., that not enough resources are available) and that, therefore, node aggregation is required to obtain an aggregated nodes complying with the capacity-related requirements of the service.

The reference value of available node capacities may be determined as one of a sum of available node capacities and an average of available node capacities per site in the cloud computing environment. The reference value of available node capacities may also be determined differently per site in the cloud computing environment, e.g., according to the number of cloud sites and hardware configuration per cloud site. The above may similarly apply to the classification as a service which requires link aggregation or not, the difference being that, instead of node-related capacities, link-related capacities may be considered. Determining whether link aggregation is required may thus include determining a reference value of available link capacities in the network infrastructure, calculating a total of required link capacities from the one or more capacity-related requirements of the service, and determining whether link aggregation is required based on a comparison of the total of required link capacities with the reference value of available link capacities.

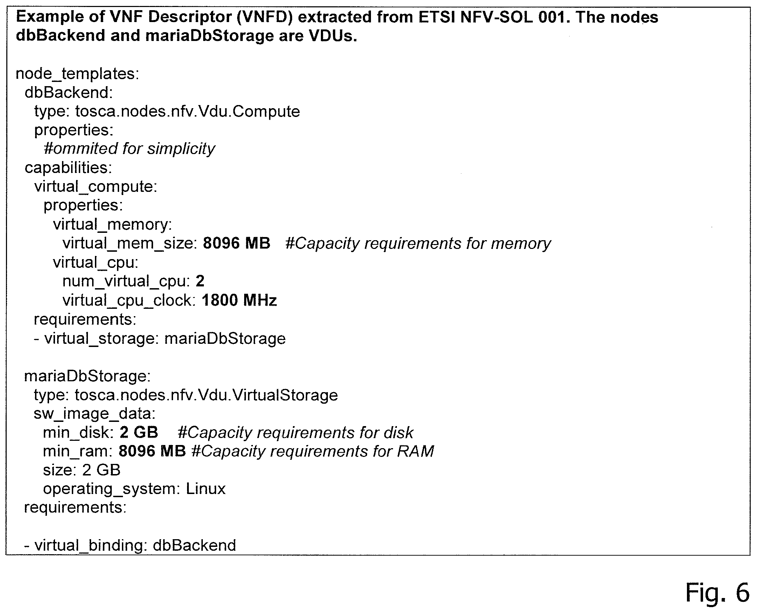

As described above, deployment descriptors are used to define deployment requirements and the operational behavior of services to be deployed on the network infrastructure. Thus, in one implementation, the capacity related requirements of the service are derived from a deployment descriptor of the service. Since, in conventional systems, deployment descriptors may be stored in service catalogs, the deployment descriptor of the service may be obtained from a service catalog available in the cloud computing environment. An exemplary deployment descriptor is shown in Figure 6 for illustrative purposes, which, in the shown example, corresponds to a VNFD extracted from ETSI GS NFV-SOL 001, where the nodes are given by VDUs.

When the service corresponds to a network service to be managed on the network infrastructure, the one or more capacity-related requirements of the service are derived from a network service descriptor of the network service. The network service and the network service descriptor may be understood as a network service and as an NSD as defined in ETSI GS NFV-SOL 001, respectively, such as defined in ETSI GS NFV-SOL 001 V2.5.1 (2018-12) or successor versions thereof. Similarly, when the service corresponds to a virtualized network function to be managed on the network infrastructure, the one or more capacity-related requirements of the service are derived from a virtualized network function descriptor of the virtualized network function. The virtualized network function and the virtualized network function descriptor may be understood as a VNF and as a VNFD as defined in ETSI GS NFV-SOL 001, respectively, such as defined in ETSI GS NFV-SOL 001 V2.5.1 (2018-12) or successor versions thereof.

Node-related requirements among the one or more capacity-related requirements of the service may be derived from at least one definition of a virtual deployment unit in the deployment descriptor. The virtual deployment unit may be a VDU as defined in ETSI GS NFV 003, such as defined in ETSI GS NFV 003 V1.4.1 (2018-08) or successor versions thereof. Similarly, link-related requirements among the one or more capacity-related requirements of the service may be derived from at least one definition of a virtual link in the deployment descriptor. The virtual link may be a VL as defined in ETSI GS NFV 003, such as defined in ETSI GS NFV 003 V1.4.1 (2018-08) or successor versions thereof.

The aggregation component may be executed as a standalone component or may be comprised as a subcomponent of another component being executed in the cloud computing environment. In one variant, the aggregated component may be executed as a component of the orchestration component, wherein the orchestration component may be a central orchestration component being centrally responsible for management of services on the network infrastructure in the cloud computing environment. In another variant, the aggregation component may be executed in a distributed manner on at least one of a central orchestration component being centrally responsible for management of services on the network infrastructure in the cloud computing environment and one or more local orchestration components each being locally responsible for management of services on a local network infrastructure of a site of the cloud computing environment.

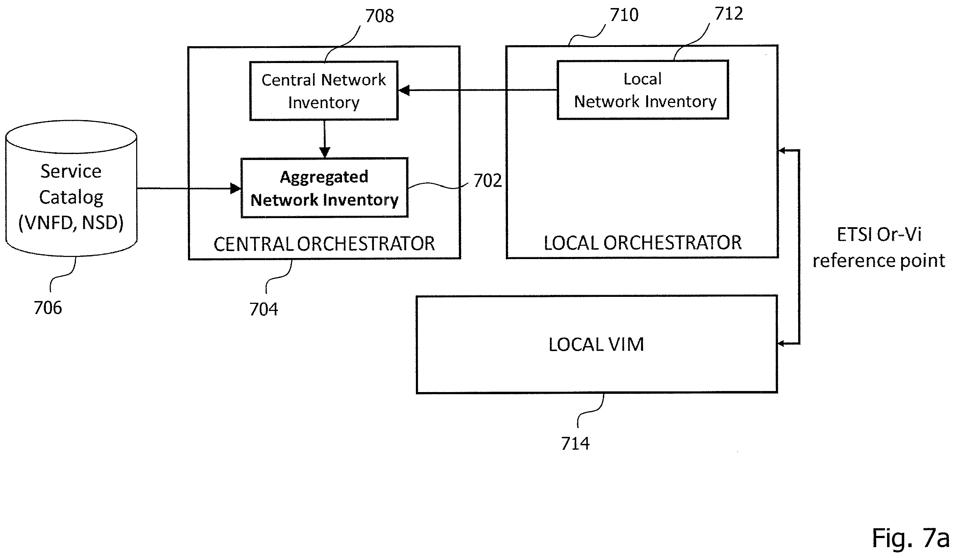

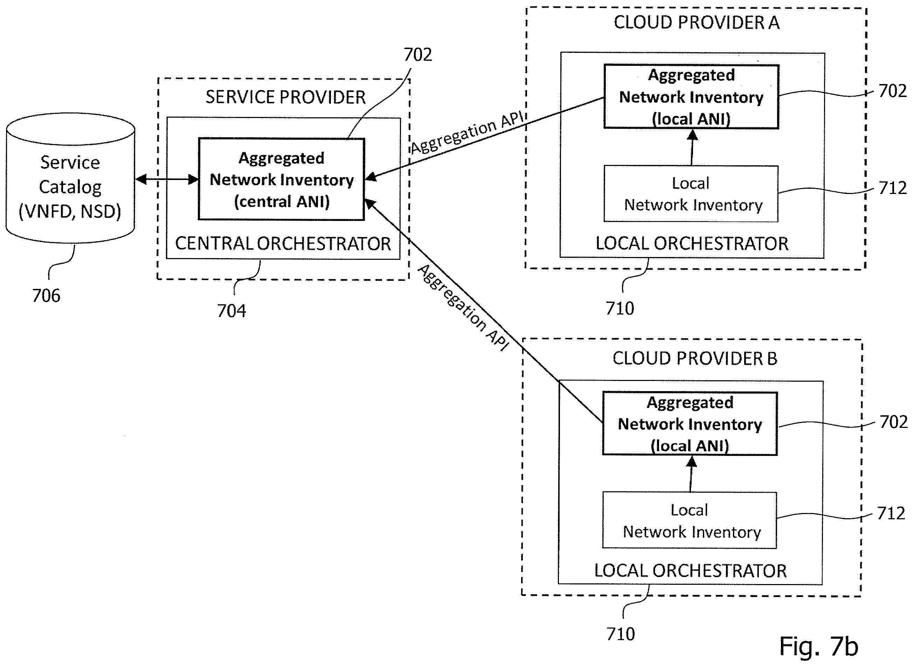

Such variants are exemplarily depicted in Figures 7a and 7b, wherein Figure 7a illustrates an example in which the aggregation component 702 (denoted as "aggregated network inventory" in the figure) is executed as part of a central orchestration component 704. As shown in the figure, the aggregation component 702 may receive as inputs (i) service requirements from a service catalog 706 and (ii) a representation of resources available in the network infrastructure from a central network inventory 708, which the central orchestration component 704 may build based on topologies of nodes and links of different sites of the cloud computing environment received from one or more local orchestration components 710 which each may maintain a local network inventory 712. As shown in the figure, each local orchestration component 710 may additionally communicate with a virtual infrastructure manager (VIM) 714 of the local site (e.g., via an ETSI Or-Vi reference point) to build up the respective local network inventory 712. Based on the above inputs (i) and (ii), the aggregation component 702 may then generate an aggregated representation as described above.

Figure 7b illustrates another example in which the aggregation component 702 is not executed in a centralized manner by a service provider, but in a distributed manner across the service provider (hosting the central orchestration component 704) and several cloud providers (hosting the local orchestration component 710) so as to enable an application programming interface (API) based inventory creation and abstraction between a service provider and cloud providers. Respective APIs are denoted as "aggregation API" in the figure. In one such variant, a full representation of the aggregation component 702 may be provided at the central orchestration component 704 and partial representations of the aggregation component 702 may be provided at the local orchestration components 710, for example.

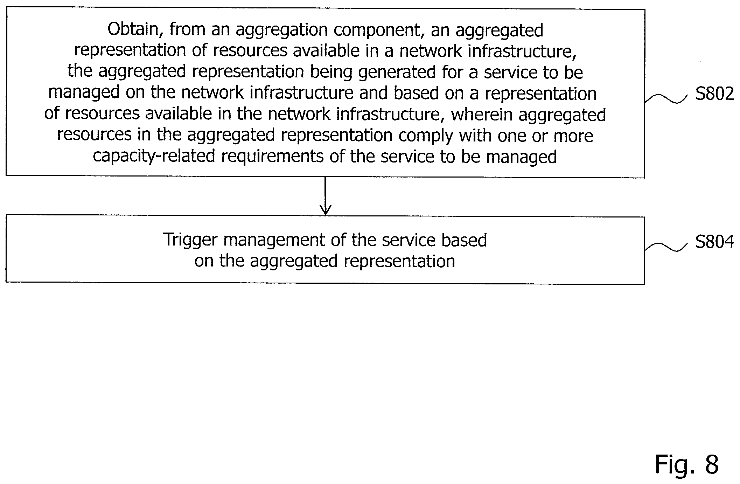

Figure 8 illustrates a method which may be performed by the orchestration component executed on the computing unit 410 according to the present disclosure. The method is dedicated to simplifying management of a service on a network infrastructure in a cloud computing environment. The operation of the orchestration component may be complementary to the operation of the aggregation component described above and, as such, aspects described above with regard to the operation of the orchestration component may be applicable to the operation of the orchestration component executed on the computing unit 410 described in the following as well, and vice versa. Unnecessary repetitions are thus omitted in the following.

In step S802, the orchestration component may obtain, from an aggregation component, an aggregated representation of resources available in the network infrastructure, the aggregated representation being generated for a service to be managed on the network infrastructure and based on a representation of resources available in the network infrastructure, wherein aggregated resources in the aggregated representation comply with one or more capacity-related requirements of the service to be managed. In step S804, the orchestration component may trigger management of the service based on the aggregated representation. Triggering management of the service based on the aggregated representation may include calculating a placement of the service on the network infrastructure based on the aggregated representation of the resources, and triggering management of the service based on the calculated placement.

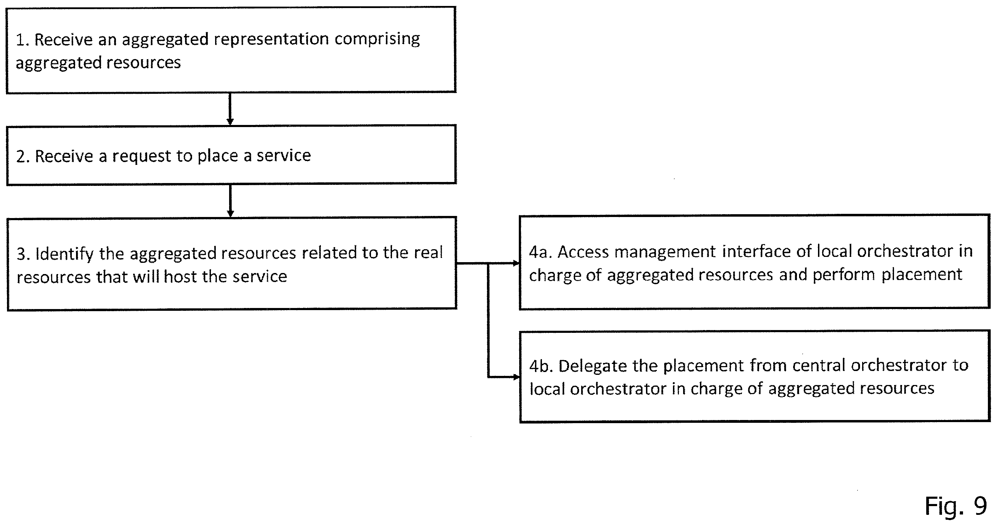

Figure 9 illustrates a more detailed method which may be performed by the orchestration component. In step 1 of the method, the orchestration component may receive the aggregated representation as described above in accordance with step S802. Triggering management of the service based on the aggregated representation in accordance with step S804 is exemplified in Figure 9 in that the orchestration component may receive, in step 2, a request to place a new service. Such request may be received from a placement engine of the cloud computing environment, for example. In step 3, the orchestration component may then identify the aggregated resources related to the real resources so as to determine the real resources which may host the service (i.e., where to place the service). For the following step of performing (or triggering performing) the actual placement of the service, two variants are indicated in the figure. In the first variant of step 4a, the orchestration component may directly access a management interface of the local orchestrator in charge of the aggregated resources and may perform the placement via the management interface. The second variant of step 4b relates to the case that the orchestration component is a central orchestration component. In this case, the orchestration component may delegate the placement to the local orchestrator in charge of the aggregated resources. It will be understood that, while such examples reflect a two-level hierarchy of orchestration, the technique presented herein may be practiced with orchestration hierarchies of more than two levels as well.

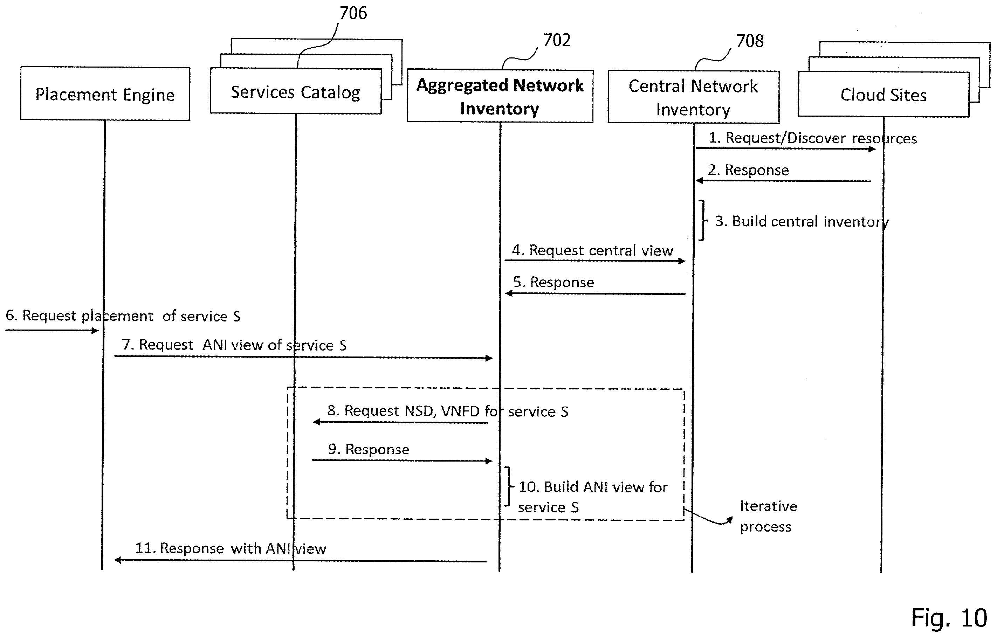

Figure 10 illustrates a sequence diagram providing an overview of an overall placement process using the aggregation component 702. As described above, the central network inventory 708 provided at the central orchestration component 704 may request (or discover) resources from the local orchestration components 710 of different cloud sites and build up a central network inventory (cf. steps 1, 2 and 3 of the diagram). In steps 4 and 5, the aggregation component 702 may request the representation of resources from the central network inventory 708 and receive this representation as a "central view". When a request for placement of a new service is received by a placement engine (e.g., executed as part of the central orchestration component 704) in step 6, the placement engine may request an aggregated representation of the resources (denoted "ANI view" in the figure) from the aggregation component 702 in step 7. Upon receipt of this request, the aggregation component 702 requests deployment descriptors, such as at least one of an NSD and a VNFD for the service from the service catalog 706 and generate the aggregated representation of the resources in accordance with the technique presented herein (cf. steps 8, 9 and 10 of the diagram). In step 11, the aggregation component 702 may provide (e.g., send) the aggregated representation to the placement engine which may then proceed to calculate the optimal placement based on the aggregated representation of the resources and, once determined, may trigger the actual placement (e.g., deployment) of the service based on the determined optimal placement, as described above.

In Figure 10, the dashed rectangle surrounding steps 8, 9 and 10 generally indicates that, in one variant, these steps may be performed in an iterative process for a plurality of services (e.g., all services) contained in the service catalog 706 so that the aggregated network inventory maintained by the aggregation component 702 may not only be built up in a stepwise manner upon receipt of respective requests from a placement engine (such as the request in step 7), but in a single round for all services contained in the service catalog 706.

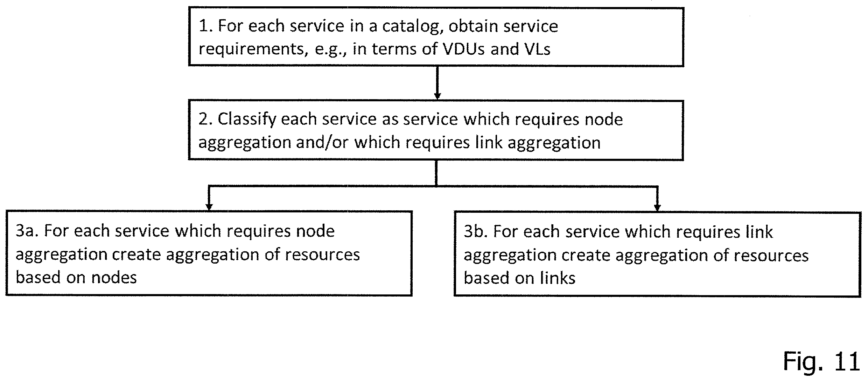

Figure 11 illustrates a more detailed view of an iterative process of building up the aggregated network inventory for a plurality of services contained in the service catalog 706. According to the process, the service requirements (i.e., the capacity-related requirements of the service) may be obtained from the service catalog 706 for each service contained in the service catalog 706 in step 1. As a mere example, the service requirements may be obtained in the form of VDUs and VLs. In step 2, each service may then be classified as a service which requires node aggregation and/or link aggregation. Subsequently, for each service which requires node aggregation, an aggregation of resources may be generated based on nodes in step 3a and, for each service which requires link aggregation, an aggregation of resources may be generated based on links. It will be understood that steps 3a and 3b may be executed mutually exclusive or that both steps 3a and 3b may be performed.

In a graphical form, the original representation of resources available in the network infrastructure and the aggregated representation thereof may be considered as graphs in which nodes correspond to vertices and links correspond to edges between two nodes. In this case, if only node aggregation is required, vertices of cloud sites may be aggregated (e.g., grouped) according to pools of node requirements (e.g., VDU requirements) of the service and the aggregated vertices may be annotated by the sum of the corresponding node resource capacities. Edges from merged vertices may be discarded. If only link aggregation is required, edges of cloud sites may be aggregated (e.g., grouped) according to pools of link requirements (e.g., VL requirements) of the service and the aggregated edges may be annotated by the sum of corresponding link resource capacities. Vertices from merged links may be discarded. If both node aggregation and link aggregation are required, vertices and edges of cloud sites may be aggregated (e.g., grouped) according to pools of node requirements (e.g., VDU requirements) and link requirements (e.g., VL requirements) of the service and the resulting graph may be annotated with both node and link capacities accordingly.

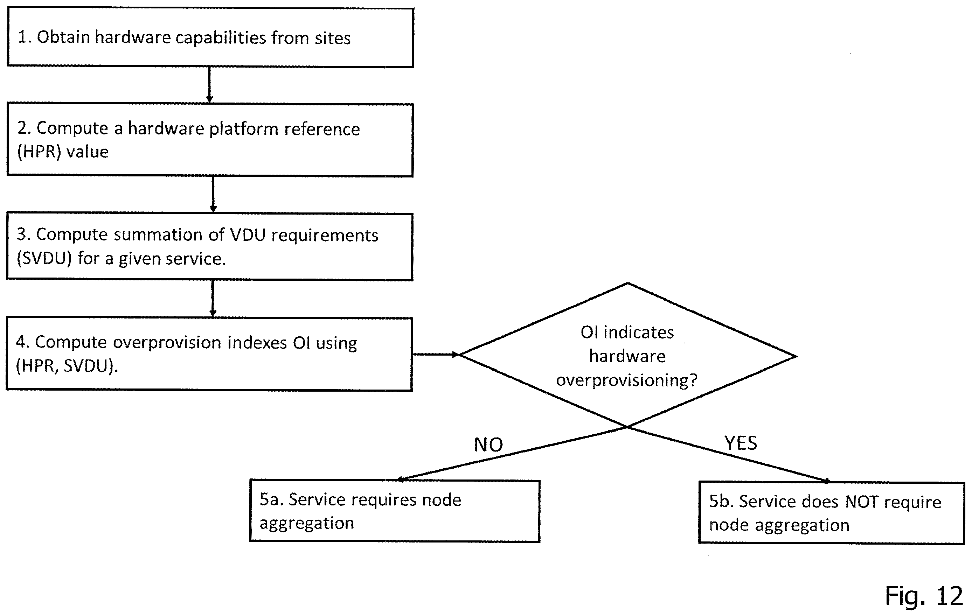

Figure 12 illustrates an exemplary method of carrying out the classification of a service as a service which requires node aggregation or not, i.e., based on determining whether - given the capacity-related requirements of the service - the network infrastructure is overprovisioned or underprovisioned, as described above. In step 1 of the method, hardware capabilities of the nodes may be obtained from the cloud sites. In step 2, a hardware platform reference (HPR) value may be calculated as a reference value indicative of actual hardware capabilities of cloud sites. In step 3, a summation of the capacity-related service may be computed (in the shown example, a summation of VDU requirements (SVDU)) and, based on the HPR and SVDU, an overprovisioning index (OI) may be calculated. If the calculated OI then indicates hardware underprovisioning (i.e., indicating that not enough hardware resources are available for the service), it may be determined that the service requires node aggregation in step 5a, to thereby obtain aggregated nodes which comply with the capacity-related requirements of the service. If, on the other hand, the calculated OI indicates overprovisioning (i.e., indicating that hardware resources are available in abundance), it may be determined that the service does not require node aggregation in step 5b. It will be understood that the same procedure may generally be carried out to classify a service as a service which requires link aggregation or not, the only difference being that, instead of node resources, link resources may be used to determine the OI.

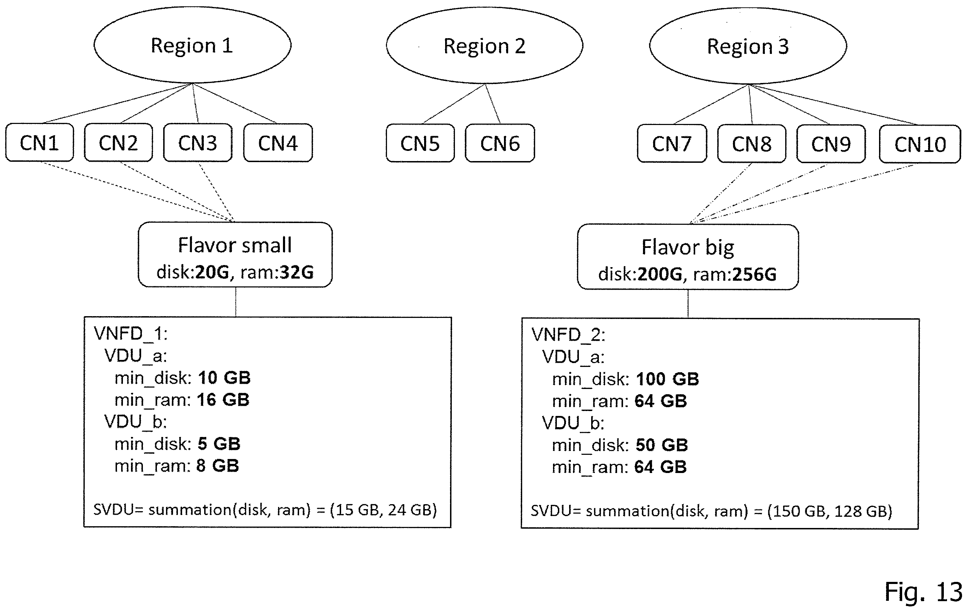

Figure 13 illustrates an exemplary implementation of the technique presented herein using ONAP and OpenStack. In the example, so called OpenStack flavors are used as features of node aggregation. In OpenStack, flavors define the compute, memory and storage capacity of Nova computing instances. A flavor may thus correspond to an available hardware configuration for a server and defines the size of a virtual server that can be launched. In order to group vertices of cloud sites according to pools of VDU requirements, OpenStack flavors may be used as follows: (1) for each VNFD, map the set of requirements (e.g., storage, memory) to an OpenStack flavor, compute a summation of VDU requirements, i.e., an SVDU, and map the SVDU to the flavor that minimally supports the deployment of the VNF described in the VNFD, (2) for each flavor identified in (1), obtain compute nodes of the respective flavor and aggregate them to create a single aggregated node, wherein compute nodes of different cloud regions may not be aggregated, and (3) expose the aggregated nodes created in (2) per OpenStack cloud region. An example of such a scenario is illustrated in Figure 13 which shows that compute nodes CN1, CN2 and CN3 have been merged into the single aggregated node "flavor small" providing sufficient resources to comply with the capacity-related requirements of VNFD_1 and compute nodes CN8, CN9 and CN10 have been merged into the single aggregated node "flavor big" providing sufficient resources to comply with the capacity-related requirements of VNFD_2.

As has become apparent from the above, the present disclosure provides a technique for simplifying management of a service on a network infrastructure in a cloud computing environment. Due to the reduced number of nodes and/or links in the aggregated representation of the resources, the computational complexity of the placement problem, i.e., where to best place a service on the available infrastructure, may be alleviated and both network management and service deployment operations may be executed more efficiently, so that the time to deploy a service and to perform life-cycle operations in which service resources are rearranged, such as scaling VNFs or workloads, may be reduced. By considering service requirements in generating the aggregated representation, an aggregated network inventory may be built up which is specifically optimized for the services contained in the service catalog of the cloud computing environment.

It is believed that the advantages of the technique presented herein will be fully understood from the foregoing description, and it will be apparent that various changes may be made in the form, constructions and arrangement of the exemplary aspects.

Because the technique presented herein can be varied in many ways, it will be recognized that the invention should be limited only by the scope of the claims that follow.

## Claims

1. A method for simplifying management of a service on a network infrastructure in a cloud computing environment, the method being performed by an aggregation component (702) and comprising:
generating (S502), for a service to be managed on the network infrastructure and based on a representation of resources available in the network infrastructure, an aggregated representation of the resources available in the network infrastructure, wherein aggregated resources in the aggregated representation are computed to comply with one or more capacity-related requirements of the service to be managed; and
providing (S504) the aggregated representation to an orchestration component (704) for management of the service,
**characterised in that** the aggregated representation is generated specifically for the service based on the one or more capacity-related requirements of the service derived from a deployment descriptor of the service.

2. The method of claim 1, wherein the resources in the representation comprise nodes and links of the network infrastructure each providing a particular capacity.

3. The method of claim 2, wherein generating (S502) the aggregated representation of the resources includes:
determining whether at least one of node aggregation and link aggregation is required for the aggregated resources to comply with the one or more capacity-related requirements of the service.

4. The method of claim 3, wherein:
- when it is determined that node aggregation is required, generating (S502) the aggregated representation of the resources includes: aggregating vertices of cloud sites according to pools of node requirements of the service; annotating the aggregated vertices by the sum of the corresponding node resource capacities; and discarding edges from merged vertices; and/or
- when it is determined that link aggregation is required, generating (S502) the aggregated representation of the resources includes: -aggregating vertices of cloud sites according to pools of node requirements of the service; annotating the aggregated vertices by the sum of the corresponding node resource capacities; and discarding edges from merged vertices.

5. The method of claim 3 or 4, wherein determining whether node aggregation is required includes:
determining a reference value of available node capacities in the network infrastructure, wherein the reference value is indicative of actual hardware capabilities of cloud sites;
calculating a total of required node capacities from the one or more capacity-related requirements of the service; and
determining whether node aggregation is required based on a comparison of the total of required node capacities with the reference value of available node capacities, wherein the reference value of available node capacities is determined as one of a sum of available node capacities and an average of available node capacities per site in the cloud computing environment.

6. The method of any one of claims 3 to 5, wherein determining whether link aggregation is required includes:
determining a reference value of available link capacities in the network infrastructure;
calculating a total of required link capacities from the one or more capacity-related requirements of the service; and
determining whether link aggregation is required based on a comparison of the total of required link capacities with the reference value of available link capacities.

7. The method of any one of claims 1 to 6, wherein the deployment descriptor of the service is obtained from a service catalog (706) available in the cloud computing environment.

8. The method of any one of claims 1 to 7, wherein, when the service corresponds to a network service to be managed on the network infrastructure, the one or more capacity-related requirements of the service are derived from a network service descriptor of the network service; and/or
wherein, when the service corresponds to a virtualized network function to be managed on the network infrastructure, the one or more capacity-related requirements of the service are derived from a virtualized network function descriptor of the virtualized network function.

9. The method of any one of claims 1 to 8, wherein node-related requirements among the one or more capacity-related requirements of the service are derived from at least one definition of a virtual deployment unit in the deployment descriptor; and/or
wherein link-related requirements among the one or more capacity-related requirements of the service are derived from at least one definition of a virtual link in the deployment descriptor.

10. The method of any one of claims 1 to 9, wherein:
(i) the aggregation component (702) is executed as a component of the orchestration component (704), wherein the orchestration component (704) is a central orchestration component being centrally responsible for management of services on the network infrastructure in the cloud computing environment; or
(ii) the aggregation component (702) is executed in a distributed manner on at least one of a central orchestration component (704) being centrally responsible for management of services on the network infrastructure in the cloud computing environment and one or more local orchestration components (710) each being locally responsible for management of services on a local network infrastructure of a site of the cloud computing environment.

11. A method for simplifying management of a service on a network infrastructure in a cloud computing environment, the method being performed by an orchestration component (704) and comprising:
obtaining (S802), from an aggregation component (702), an aggregated representation of resources available in the network infrastructure, the aggregated representation being generated for a service to be managed on the network infrastructure and based on a representation of resources available in the network infrastructure, wherein aggregated resources in the aggregated representation comply with one or more capacity-related requirements of the service to be managed, and
triggering (S804) management of the service based on the aggregated representation.
**characterised in that** the aggregated representation is generated specifically for the service based on the one or more capacity-related requirements of the service derived from a deployment descriptor of the service.

12. The method of claim 11, wherein triggering (S804) management of the service based on the aggregated representation includes:
calculating a placement of the service on the network infrastructure based on the aggregated representation of the resources; and
triggering management of the service based on the calculated placement.

13. A computer program product comprising program code portions for performing the method of any one of claims 1 to 12 when the computer program product is executed on one or more computing devices.

14. A computing unit (400) configured to execute an aggregation component (702) for simplifying management of a service on a network infrastructure in a cloud computing environment, the computing unit (400) comprising at least one processor (402) and at least one memory (404), the at least one memory (404) containing instructions executable by the at least one processor (402) such that the aggregation component (702) is operable to perform the method of any one of claims 1 to 10.

15. A computing unit (410) configured to execute an orchestration component (704) for simplifying management of a service on a network infrastructure in a cloud computing environment, the computing unit (410) comprising at least one processor (412) and at least one memory (414), the at least one memory (414) containing instructions executable by the at least one processor (412) such that the orchestration component (704) is operable to perform the method of claim 11 or 12.

## Patentansprüche

1. Verfahren zur Vereinfachung einer Verwaltung eines Dienstes in einer Netzwerkinfrastruktur in einer Cloud-Computing-Umgebung, wobei das Verfahren von einer Aggregationskomponente (702) ausgeführt wird und aufweist:
Erzeugen (S502) einer aggregierten Darstellung der in der Netzwerkinfrastruktur verfügbaren Ressourcen für einen auf der Netzwerkinfrastruktur zu verwaltenden Dienst auf der Grundlage einer Darstellung der in der Netzwerkinfrastruktur verfügbaren Ressourcen, wobei aggregierte Ressourcen in der aggregierten Darstellung so berechnet werden, dass sie eine oder mehrere kapazitätsbezogene Anforderungen des zu verwaltenden Dienstes erfüllen; und
Bereitstellen (S504) der aggregierten Darstellung an eine Orchestrierungskomponente (704) zur Verwaltung des Dienstes,
**dadurch gekennzeichnet, dass** die aggregierte Darstellung speziell für den Dienst auf der Grundlage der einen oder mehreren kapazitätsbezogenen Anforderungen des Dienstes erzeugt wird, die aus einem Bereitstellungsdeskriptor des Dienstes abgeleitet werden.

2. Verfahren nach Anspruch 1, wobei die Ressourcen in der Darstellung Knoten und Verbindungen der Netzwerkinfrastruktur beinhalten, die jeweils eine bestimmte Kapazität bereitstellen.

3. Verfahren nach Anspruch 2, wobei das Erzeugen (S502) der aggregierten Darstellung der Ressourcen beinhaltet:
Bestimmen, ob mindestens eine einer Knotenaggregation und einer Verbindungsaggregation erforderlich ist, damit die aggregierten Ressourcen die eine oder mehreren kapazitätsbezogenen Anforderungen des Dienstes erfüllen.

4. Verfahren nach Anspruch 3, wobei:
- wenn bestimmt wird, dass eine Knotenaggregation erforderlich ist, das Erzeugen (S502) der aggregierten Darstellung der Ressourcen beinhaltet:
Aggregieren von Knotenpunkten von Cloud-Standorten gemäß Pools von Knotenanforderungen des Dienstes; Kommentieren der aggregierten Knotenpunkte durch die Summe der entsprechenden Knotenressourcenkapazitäten; und Verwerfen von Kanten aus zusammengeführten Knotenpunkten; und/oder
- wenn bestimmt wird, dass eine Verbindungsaggregation erforderlich ist, das Erzeugen (S502) der aggregierten Darstellung der Ressourcen beinhaltet:
Aggregieren von Knotenpunkten von Cloud-Standorten gemäß Pools von Knotenanforderungen des Dienstes; Kommentieren der aggregierten Knotenpunkte durch die Summe der entsprechenden Knotenressourcenkapazitäten; und Verwerfen von Kanten aus zusammengeführten Knotenpunkten.

5. Verfahren nach Anspruch 3 oder 4, wobei das Bestimmen, ob eine Knotenaggregation erforderlich ist, beinhaltet:
Bestimmen eines Referenzwerts der verfügbaren Knotenkapazitäten in der Netzwerkinfrastruktur, wobei der Referenzwert die tatsächlichen Hardwarekapazitäten der Cloud-Standorte angibt;
Berechnen einer Summe der erforderlichen Knotenkapazitäten aus einer oder mehreren kapazitätsbezogenen Anforderungen des Dienstes; und
Bestimmen, ob eine Knotenaggregation erforderlich ist, basierend auf einem Vergleich der Summe der erforderlichen Knotenkapazitäten mit dem Referenzwert der verfügbaren Knotenkapazitäten, wobei der Referenzwert der verfügbaren Knotenkapazitäten als eine Summe der verfügbaren Knotenkapazitäten und ein Durchschnitt der verfügbaren Knotenkapazitäten pro Standort in der Cloud-Computing-Umgebung bestimmt wird.

6. Verfahren nach einem der Ansprüche 3 bis 5, wobei das Bestimmen, ob eine Verbindungsaggregation erforderlich ist, beinhaltet:
Bestimmen eines Referenzwerts der verfügbaren Verbindungskapazitäten in der Netzwerkinfrastruktur;
Berechnen einer Summe der erforderlichen Verbindungskapazitäten aus einer oder mehreren kapazitätsbezogenen Anforderungen des Dienstes; und
Bestimmen, ob eine Verbindungsaggregation erforderlich ist, basierend auf einem Vergleich der Summe der erforderlichen Verbindungskapazitäten mit dem Referenzwert der verfügbaren Verbindungskapazitäten.

7. Verfahren nach einem der Ansprüche 1 bis 6, wobei der Bereitstellungsdeskriptor des Dienstes aus einem in der Cloud-Computing-Umgebung verfügbaren Dienstkatalog (706) bezogen wird.

8. Verfahren nach einem der Ansprüche 1 bis 7, wobei, wenn der Dienst einem Netzwerkdienst entspricht, der auf der Netzwerkinfrastruktur verwaltet werden soll, die eine oder mehreren kapazitätsbezogenen Anforderungen des Dienstes aus einem Netzwerkdienstdeskriptor des Netzwerkdienstes abgeleitet werden; und/oder
wobei, wenn der Dienst einer virtualisierten Netzwerkfunktion entspricht, die auf der Netzwerkinfrastruktur verwaltet werden soll, die eine oder mehreren kapazitätsbezogenen Anforderungen des Dienstes aus einem virtualisierten Netzwerkfunktionsdeskriptor der virtualisierten Netzwerkfunktion abgeleitet werden.

9. Verfahren nach einem der Ansprüche 1 bis 8, wobei knotenbezogene Anforderungen unter den einen oder mehreren kapazitätsbezogenen Anforderungen des Dienstes aus mindestens einer Definition einer virtuellen Bereitstellungseinheit in dem Bereitstellungsdeskriptor abgeleitet werden; und/oder
wobei verbindungsbezogene Anforderungen unter den einen oder mehreren kapazitätsbezogenen Anforderungen des Dienstes aus mindestens einer Definition einer virtuellen Verbindung in dem Bereitstellungsdeskriptor abgeleitet werden.

10. Verfahren nach einem der Ansprüche 1 bis 9, wobei:
(i) die Aggregationskomponente (702) als Komponente der Orchestrierungskomponente (704) ausgeführt wird, wobei die Orchestrierungskomponente (704) eine zentrale Orchestrierungskomponente ist, die zentral für die Verwaltung von Diensten auf der Netzwerkinfrastruktur in der Cloud-Computing-Umgebung verantwortlich ist; oder
(ii) die Aggregationskomponente (702) verteilt ausgeführt wird auf mindestens einer zentralen Orchestrierungskomponente (704), die zentral für die Verwaltung von Diensten auf der Netzwerkinfrastruktur in der Cloud-Computing-Umgebung zuständig ist, und einer oder mehreren lokalen Orchestrierungskomponenten (710), die jeweils lokal für die Verwaltung von Diensten auf einer lokalen Netzwerkinfrastruktur eines Standorts der Cloud-Computing-Umgebung zuständig sind.

11. Verfahren zur Vereinfachung einer Verwaltung eines Dienstes in einer Netzwerkinfrastruktur in einer Cloud-Computing-Umgebung, wobei das Verfahren von einer Orchestrierungskomponente (704) ausgeführt wird und aufweist:
Erhalten (S802) einer aggregierten Darstellung der in der Netzwerkinfrastruktur verfügbaren Ressourcen von einer Aggregationskomponente (702), wobei die aggregierte Darstellung für einen auf der Netzwerkinfrastruktur zu verwaltenden Dienst und auf der Grundlage einer Darstellung der in der Netzwerkinfrastruktur verfügbaren Ressourcen erzeugt wird, wobei aggregierte Ressourcen in der aggregierten Darstellung einer oder mehreren kapazitätsbezogenen Anforderungen des zu verwaltenden Dienstes entsprechen, und
Auslösen (S804) einer Verwaltung des Dienstes auf der Grundlage der aggregierten Darstellung,
**dadurch gekennzeichnet, dass** die aggregierte Darstellung speziell für den Dienst auf der Grundlage der einen oder mehreren kapazitätsbezogenen Anforderungen des Dienstes erzeugt wird, die aus einem Bereitstellungsdeskriptor des Dienstes abgeleitet werden.

12. Verfahren nach Anspruch 11, wobei das Auslösen (S804) einer Verwaltung des Dienstes auf der Grundlage der aggregierten Darstellung beinhaltet:
Berechnen einer Platzierung des Dienstes in der Netzwerkinfrastruktur auf der Grundlage der aggregierten Darstellung der Ressourcen; und
Auslösen einer Verwaltung des Dienstes auf der Grundlage der berechneten Platzierung.

13. Computerprogrammprodukt, das Programmcodeabschnitte zum Ausführen des Verfahrens nach einem der Ansprüche 1 bis 12 aufweist, wenn das Computerprogrammprodukt auf einem oder mehreren Computergeräten ausgeführt wird.

14. Recheneinheit (400), die so konfiguriert ist, dass sie eine Aggregationskomponente (702) ausführt, um eine Verwaltung eines Dienstes in einer Netzwerkinfrastruktur in einer Cloud-Computing-Umgebung zu vereinfachen, wobei die Recheneinheit (400) mindestens einen Prozessor (402) und mindestens einen Speicher (404) aufweist, wobei der mindestens eine Speicher (404) Anweisung enthält, die von dem mindestens einen Prozessor (402) ausführbar sind, so dass die Aggregationskomponente (702) betreibbar ist, um das Verfahren nach einem der Ansprüche 1 bis 10 auszuführen.

15. Recheneinheit (410), die so konfiguriert ist, dass sie eine Orchestrierungskomponente (704) ausführt, um eine Verwaltung eines Dienstes in einer Netzwerkinfrastruktur in einer Cloud-Computing-Umgebung zu vereinfachen, wobei die Recheneinheit (410) mindestens einen Prozessor (412) und mindestens einen Speicher (414) aufweist, wobei der mindestens eine Speicher (414) Anweisung enthält, die von dem mindestens einen Prozessor (412) ausführbar sind, so dass die Orchestrierungskomponente (704) betreibbar ist, um das Verfahren nach Anspruch 11 oder 12 auszuführen.

## Revendications

1. Procédé permettant de simplifier une gestion d'un service sur une infrastructure réseau dans un environnement informatique en nuage, le procédé étant exécuté par un composant d'agrégation (702) et comprenant :
générer (S502), pour un service à gérer sur l'infrastructure réseau et sur la base d'une représentation des ressources disponibles dans l'infrastructure réseau, une représentation agrégée des ressources disponibles dans l'infrastructure réseau, dans lequel des ressources agrégées dans la représentation agrégée sont calculées pour se conformer à une ou plusieurs exigences liées à une capacité du service à gérer ; et
fournir (S504) la représentation agrégée à un composant d'orchestration (704) pour la gestion du service,
**caractérisé en ce que** la représentation agrégée est générée spécifiquement pour le service sur la base de l'une ou des plusieurs exigences liées à la capacité du service dérivées d'un descripteur de déploiement du service.

2. Procédé selon la revendication 1, dans lequel les ressources dans la représentation comprennent des nœuds et des liaisons de l'infrastructure réseau fournissant chacun une capacité particulière.

3. Procédé selon la revendication 2, dans lequel la génération (S502) de la représentation agrégée des ressources comprend :
déterminer si au moins l'une parmi une agrégation de nœuds et une agrégation de liens est requise pour que les ressources agrégées soient conformes à la ou aux exigences liées à la capacité du service.

4. Procédé selon la revendication 3, dans lequel :
- lorsqu'il est déterminé qu'une agrégation de nœuds est requise, la génération (S502) de la représentation agrégée des ressources comprend : agréger des sommets des sites en nuage en fonction des pools d'exigences de nœuds du service ; annoter des sommets agrégés par la somme des capacités de ressources de nœuds correspondantes ; et supprimer des arêtes des sommets fusionnés ; et/ou
- lorsqu'il est déterminé qu'une agrégation de liens est requise, la génération (S502) de la représentation agrégée des ressources comprend : agréger des sommets des sites en nuage en fonction des pools d'exigences de nœuds du service ; annoter des sommets agrégés par la somme des capacités de ressources de nœuds correspondantes ; et supprimer des arêtes des sommets fusionnés.

5. Procédé selon la revendication 3 ou 4, dans lequel déterminer si une agrégation de nœuds est requise comprend :
déterminer une valeur de référence des capacités de nœuds disponibles dans l'infrastructure réseau, la valeur de référence étant indicative des capacités matérielles réelles des sites en nuage ;
calculer un total des capacités de nœuds requises à partir d'une ou plusieurs exigences liées à la capacité du service ; et
déterminer si l'agrégation de nœuds est requise sur la base d'une comparaison entre le total des capacités de nœuds requises et la valeur de référence des capacités de nœuds disponibles, la valeur de référence des capacités de nœuds disponibles étant déterminée comme étant soit la somme des capacités de nœuds disponibles, soit la moyenne des capacités de nœuds disponibles par site dans l'environnement informatique en nuage.

6. Procédé selon l'une quelconque des revendications 3 à 5, dans lequel déterminer si une agrégation de liens est requise comprend :
déterminer une valeur de référence des capacités de liaison disponibles dans l'infrastructure réseau ;
calculer un total des capacités de liaison requises à partir d'une ou plusieurs exigences liées à la capacité du service ; et
déterminer si l'agrégation de liens est requise sur la base d'une comparaison entre le total des capacités de liaison requises et la valeur de référence des capacités de liaison disponibles.

7. Procédé selon l'une quelconque des revendications 1 à 6, dans lequel le descripteur de déploiement du service est obtenu à partir d'un catalogue de services (706) disponible dans l'environnement informatique en nuage.

8. Procédé selon l'une quelconque des revendications 1 à 7, dans lequel, lorsque le service correspond à un service réseau à gérer sur l'infrastructure réseau, la ou les exigences liées à la capacité du service sont dérivées d'un descripteur de service réseau du service réseau ; et/ou
dans lequel, lorsque le service correspond à une fonction réseau virtualisée à gérer sur l'infrastructure réseau, la ou les exigences liées à la capacité du service sont dérivées d'un descripteur de fonction réseau virtualisée de la fonction réseau virtualisée.

9. Procédé selon l'une quelconque des revendications 1 à 8, dans lequel des exigences liées aux nœuds parmi l'une ou les plusieurs exigences liées à la capacité du service sont dérivées d'au moins une définition d'une unité de déploiement virtuelle dans le descripteur de déploiement ; et/ou
dans lequel les exigences liées à la liaison parmi l'une ou les plusieurs exigences liées à la capacité du service sont dérivées d'au moins une définition d'une liaison virtuelle dans le descripteur de déploiement.

10. Procédé selon l'une quelconque des revendications 1 à 9, dans lequel :
(i) le composant d'agrégation (702) est exécuté en tant que composant du composant d'orchestration (704), dans lequel le composant d'orchestration (704) est un composant d'orchestration central qui est centralement responsable de la gestion des services sur l'infrastructure réseau dans l'environnement informatique en nuage ; ou
(ii) le composant d'agrégation (702) est exécuté de manière distribuée sur au moins un composant d'orchestration central (704) étant centralement responsable de la gestion des services sur l'infrastructure réseau dans l'environnement informatique en nuage et un ou plusieurs composants d'orchestration locaux (710) étant chacun localement responsables de la gestion des services sur une infrastructure réseau locale d'un site de l'environnement informatique en nuage.

11. Procédé permettant de simplifier une gestion d'un service sur une infrastructure réseau dans un environnement informatique en nuage, le procédé étant exécuté par un composant d'orchestration (704) et comprenant :
obtenir (S802), à partir d'un composant d'agrégation (702), une représentation agrégée des ressources disponibles dans l'infrastructure réseau, la représentation agrégée étant générée pour un service à gérer sur l'infrastructure réseau et sur la base d'une représentation des ressources disponibles dans l'infrastructure réseau, dans lequel des ressources agrégées dans la représentation agrégée sont conformes à une ou plusieurs exigences liées à une capacité du service à gérer, et
déclencher (S804) une gestion du service sur la base de la représentation agrégée,
**caractérisé en ce que** la représentation agrégée est générée spécifiquement pour le service sur la base de l'une ou des plusieurs exigences liées à la capacité du service dérivées d'un descripteur de déploiement du service.

12. Procédé selon la revendication 11, dans lequel le déclenchement (S804) de la gestion du service sur la base de la représentation agrégée comprend :
calculer un emplacement du service sur l'infrastructure réseau sur la base de la représentation agrégée des ressources ; et
déclencher une gestion du service sur la base de l'emplacement calculé.

13. Produit logiciel comprenant des parties de code de programme pour exécuter le procédé de l'une quelconque des revendications 1 à 12 lorsque le produit logiciel est exécuté sur un ou plusieurs dispositifs informatiques.

14. Unité informatique (400) configurée pour exécuter un composant d'agrégation (702) afin de simplifier une gestion d'un service sur une infrastructure réseau dans un environnement informatique en nuage, l'unité informatique (400) comprenant au moins un processeur (402) et au moins une mémoire (404), la au moins une mémoire (404) contenant des instructions exécutables par le au moins un processeur (402) de telle sorte que le composant d'agrégation (702) soit opérationnel pour exécuter le procédé de l'une quelconque des revendications 1 à 10.

15. Unité informatique (410) configurée pour exécuter un composant d'orchestration (704) afin de simplifier une gestion d'un service sur une infrastructure réseau dans un environnement informatique en nuage, l'unité informatique (410) comprenant au moins un processeur (412) et au moins une mémoire (414), la au moins une mémoire (414) contenant des instructions exécutables par le au moins un processeur (412) de telle sorte que le composant d'orchestration (704) soit opérationnel pour exécuter le procédé de la revendication 11 ou 12.
